# EUROPEAN PATENT APPLICATION

(11) **EP 1 046 566 A2**
(43) Date of publication of application: **25.10.2000**
(21) Application number: 00301594.8
(22) Date of filing: 29.02.2000
(51) Int. Cl.: B62D 1/06

(54) **Steering wheel and method for manufacturing same**

(30) Priority: 19.04.1999 JP 11091299; 09.08.1999 JP 22531599
(71) Applicant: CUBIC CO., LTD., Shimizu-shi, Shizuoka (JP); MISAWA HOMES CO. LTD, Suginami-ku, Tokyo (JP)
(72) Inventor: Tanabe, Jun, Fujieda-shi, Shizuoka (JP); Suzuki, Takashi, Tsurugashima-shi, Saitama (JP)
(74) Representative: Hague, Alison Jane

(57) **Abstract**

A steering wheel (1) capable of giving the impression that it is formed thereon with a woodgrain pattern in a manner to extend in a circumferential direction thereof, resulting in the steering wheel having both an appearance and feel of wood which is substantially equal to that of natural wood. The steering wheel (1) includes a rim section (4) having a core (44) incorporated therein. The rim section (4) is constituted by rim elements (A2) made of a thermosoftening synthetic resin material to which woodmeal is added, resulting in the rim section (4) being formed thereon with a flow pattern. The rim elements (A2) are each re-shaped from a straight rod-like configuration into an arcuate configuration in conformity to a curvature of the core (44) and mounted on the core (44), so that the flow pattern may be transformed into an annular flow pattern.

## Description

This invention relates to a steering wheel for a vehicle, and more particularly to a steering wheel having both an appearance and feel of wood like that of natural wood and a method for manufacturing the same.

A steering wheel for a vehicle is kept grasped by a driver during driving of the vehicle, thus, it is essential that the steering wheel not only exhibits a satisfactory appearance but is pleasant to the touch. Such pleasant touch means that the steering wheel does not exhibit an excessively smooth feel, a rough feel or a tacky feel. Also, it means that the steering wheel is not slippery, excessively hot or excessively cold. Such requirements for the pleasant touch are sufficiently satisfied by a conventional wooden steering wheel. Unfortunately, the wooden steering wheel causes distortion peculiar to a natural tree material due to a variation in ambient temperature, irradiation of direct sun beams thereon, a variation in ambient moisture and the like. This results in peeling of the wooden steering wheel, cracking thereof and the like. Also, the wooden steering wheel is not suitable for mass production because currently there is a shortage of natural wood material available.

In view of the above, a steering wheel which is constructed so as to have the feel of wood like that of natural wood has been recently substituted for the wooden steering wheel in the market. Such a substitute steering wheel is generally manufactured by forming a suitable synthetic resin material into a rim section for the steering wheel by molding and applying the appearance of wood to the rim section. Such application of the appearance of wood is carried out using either techniques of providing an appearance of the thus-formed rim section with the feel of wood or techniques of subjecting a synthetic resin material which has woodmeal previously added thereto to injection molding to form a rim section. The latter techniques provide the steering wheel with not only the feel of wood but an appearance of wood due to a stream or flow pattern formed on the rim section during the injection molding.

However, the former techniques are disadvantageous in that printing on the rim section carried out after the above-described molding fails to provide the steering wheel with a satisfactory feel of wood, although it provides the steering wheel with an appearance which is very similar to that of natural wood. Also, the latter techniques of injection molding the synthetic resin material having the woodmeal added thereto fail to permit the steering wheel to exhibit a satisfactory appearance of wood although they provide it with an improved feel of wood. More particularly, in the latter techniques, the flow pattern formed during the injection molding is excessively emphasized due to foaming of moisture held in the woodmeal. Also, the latter techniques cause discolouration of the woodmeal due to generation of heat from the woodmeal by high shearing. The flow pattern formed during the injection molding is principally based on a curved flow pattern formed by a phenomenon that synthetic resin materials injected from several gates freely flow in a mold cavity and then merge with each other. In other words, the curved flow pattern is formed by spreading of the synthetic resin materials from the gates and swirling of the materials in places. If such spreading and swirling of the synthetic resin materials permitted the curved flow pattern to be finely formed, the steering wheel would be provided with an appearance of high quality in imitation of precious wood which provides a pretty grain pattern of wood, such as a circular grain pattern, a grape-like grain pattern, or the like as seen in a zelkova tree, a mulberry tree, a camphor tree, a jujube tree or the like. Unfortunately, the techniques currently practiced fail to provide the steering wheel with the feeling of high-grade wood in appearance.

The present invention has been made in view of the foregoing disadvantages of the prior art and as a result of the inventors' effort of developing a steering wheel which has both an appearance and feel of wood which is substantially equal to that of natural wood and a method for manufacturing the same. In a steering wheel of the present invention, an appearance of wood which is substantially equal to or the same as that of natural wood does not refer to an appearance of precious wood having a pretty grain pattern of wood, such as a circular grain pattern, a grape-like grain pattern, or the like. Rather, it refers to a general woodgrain such as a straight grain or a cross grain. In the present invention, such a woodgrain is formed on a rim section of the steering wheel while defining a flow pattern in a circumferential direction of the rim section, to thereby give the impression that the flow pattern is formed by a sliced veneer.

Accordingly, it is an object of the present invention to provide a steering wheel which is capable of giving the impression that it is formed thereon with a woodgrain pattern in a manner to extend in a circumferential direction thereof, resulting in the steering wheel having both an appearance and feel of wood which is substantially equal to that of natural wood.

It is another object of the present invention to provide a method for manufacturing a steering wheel which is capable of ensuring reliable and inexpensive mass-production of a steering wheel which gives the impression that the steering wheel is formed thereon with a woodgrain pattern in a manner to extend in a circumferential direction thereof, resulting in the steering wheel having both an appearance and feel of wood which is substantially equal to that of natural wood.

In accordance with one aspect of the present invention, a steering wheel is provided. The steering wheel includes a rim section having a core incorporated therein. The rim section is constituted by rim elements made of a thermosoftening synthetic resin material to which woodmeal is added, resulting in the rim section being formed thereon with a flow pattern. The rim elements are each re-shaped from a straight rod-like configuration into an arcuate configuration in conformity to a curvature of the core and mounted on the core, so that the flow pattern may be transformed into an annular flow pattern.

Such construction of the present invention permits the steering wheel to give the impression that the steering wheel is formed thereon with a woodgrain pattern in a manner to extend in a circumferential direction thereof, so that it may have both an appearance and feel of wood which is substantially equal to that of natural wood.

In a preferred embodiment of the present invention, the thermosoftening synthetic resin material has a colour pigment added thereto so that the flow pattern is formed in an annular flow pattern which has a clear woodgrain emphasized by the colour pigment added. Thus, the steering wheel of such a preferred embodiment of the present invention gives the strong impression that it is formed thereon with a woodgrain pattern as if it is formed by a sliced veneer.

In a preferred embodiment of the present invention, the rim section is formed thereon with an uneven portion to facilitate holding, in such a manner that the flow pattern is transformed into the annular flow pattern while preventing the thus-formed annular flow pattern from being disordered by the unevenness. Thus, the steering wheel of such an embodiment of the present invention gives the strong impression that it is formed thereon with a woodgrain pattern as if the unevenness on the steering wheel is formed by cutting of natural wood.

In accordance with another aspect of the present invention, a method for manufacturing a steering wheel is provided. The method includes the steps of extruding a thermosoftening synthetic resin to which woodmeal is added to prepare a pair of straight rod-like rim elements, bending the straight rod-like rim elements into an arcuate shape in conformity to a curvature of a core while keeping the rim elements softened, and mounting the rim elements thus bent on the core while interposing the core therebetween.

Thus, the method permits mass-production of a steering wheel which gives the impression that it is formed thereon with a woodgrain pattern in a manner to extend in a circumferential direction thereof, resulting in the steering wheel having both an appearance and feel of wood which is substantially equal to that of natural wood.

In a preferred embodiment of the present invention, the extruding step is carried out using a nozzle formed to have a semicircular shape in section having an arc section formed substantially in conformity to an arcuate shape which is a half of a sectional configuration of a rim section of a finished steering wheel and which is defined at an outermost portion of the rim section and a chord section projectingly provided with a core corresponding section which is formed substantially in conformity to a half of a sectional configuration of the core, resulting in the rim elements being prepared in the form of a straight rod-like shape.

Such construction permits mounting of the rim elements on the core to be carried out in the subsequent step, to thereby prevent disorder of the flow pattern in the circumferential or annular direction during re-shaping of the rim elements.

In a preferred embodiment of the present invention, the bending step is carried out using a regulating die formed thereon with projections for forming an uneven portion for holding and a forcing die, wherein the straight rod-like rim elements are each softened by re-heating to be roughly bent into an arcuate shape and then fitted in the regulating die, then pressed by means of the forcing die, during which the regulating die and forcing die cooperate with each other to define an arcuate cavity having a vacant region defined at each of opposite ends thereof in a longitudinal direction thereof. Thus, in at least preferred embodiments the method of the present invention attains satisfactory re-shaping of the rim elements while effectively preventing disorder of the flow pattern in the circumferential direction.

In a preferred embodiment of the present invention, wherein the pair of rim elements each include a front side rim element observable from a driver's seat and a rear side rim element opposite to the front side rim element, the mounting step is carried out by mounting the front and rear side rim elements on the core while adhesively joining the front and rear rim elements to each other.

Such construction permits joints between the front side rim element and the rear side rim element to be positioned at an outermost periphery of the rim section and an innermost periphery thereof, so that the joints may be substantially out of sight of a driver. Also, it permits mounting of the rim elements on the core to be attained with increased strength.

In a preferred embodiment of the present invention, the pair of rim elements each include an inner peripheral side rim element and an outer peripheral side rim element opposite to the front side rim element. The mounting step is carried out by mounting the inner and outer peripheral side rim elements on the core while adhesively joining the inner and outer peripheral side rim elements to each other. This causes joints between both rim elements to appear on a front side of the rim section which is observable from a driver's seat and a rear side thereof which is not observable from the driver's seat. Thus, when it is desired to improve aesthetic properties of the rim section and therefore the steering wheel, it is merely required to cover the front side joint with a molding or the like.

In a preferred embodiment of the present invention, the mounting step includes mounting a cover member, such as a molding, an ebony-patterned member, or the like on a joint between the rim elements. This not only effectively hides the joint but provides the steering wheel with a decorative effect. Also, it permits joining between the rim elements to be strengthened.

In a preferred embodiment of the present invention, the thermosoftening synthetic resin material which is fed in the extruding step is constituted by a combination of pellets having the woodmeal kneadingly incorporated therein and pellets having a colour pigment added thereto as well as the woodmeal and exhibiting a colour different from that of the former pellets. This permits mass-production of a steering wheel which gives the impression that it is formed thereon with a woodgrain pattern as if it is formed by a sliced veneer.

In a preferred embodiment of the present invention, the method further includes the step of applying a coating to the rim elements, wherein the coating is applied to a front side of the rim elements observable from a driver's seat. This minimizes a stain on the front side of the rim section while preventing the feel of wood on the rear side thereof from being deteriorated.

In a preferred embodiment of the present invention, the method further includes the step of carrying out liquid pressure transfer printing of the rim elements, wherein the transfer print is applied to a front side of the rim elements observable from a driver's seat. Also, the liquid pressure transfer printing is carried out so as to permit formation of a transfer printing pattern by gradations on the rim elements wherein a transfer ink layer is gradually reduced in thickness toward a rear side of the rim elements, whereby a ground pattern gradually appears on the rim elements.

This minimizes a stain of the front side of the rim section while preventing the feel of wood on the rear side from being deteriorated. Also, it permits the flow pattern and transfer pattern to cooperate with each other to provide the rim section with a high-grade appearance which gives the impression of a pretty grain pattern of precious wood.

These and other objects and many of the attendant advantages of the present invention will be readily appreciated as the same becomes better understood by reference to the following detailed description of preferred embodiments of the invention when considered in connection with the accompanying drawings; wherein:
Fig. 1A is a perspective view showing an embodiment of a steering wheel according to the present invention;
Fig. 1B is a fragmentary sectional view of the steering wheel of Fig. 1A taken along line 1B-1B;
Fig. 2A is a schematic view showing steps in a method for manufacturing a steering wheel according to an embodiment of the present invention by way of example;
Fig. 2B is an enlarged sectional view of part 2B in Fig. 2A;
Fig. 3A is a schematic view showing a liquid pressure transfer printing step in a method for manufacturing a steering wheel according to an embodiment of the present invention, by way of example;
Fig. 3B is a plan view showing rim elements mounted on a carrier unit;
Figs. 4A to 4C are schematic views showing a liquid pressure transfer printing step which permits formation of a transfer printing pattern by gradations, respectively;
Figs. 5A and 5B each are an enlarged sectional view showing a rim element which has been subjected to liquid pressure transfer printing, to thereby be provided thereon with the transfer printing pattern by gradations;
Fig. 6 is a sectional view of a die for extruding rim elements for a rim section, showing a configuration of a nozzle provided on the die;
Fig. 7A is a side elevation view partially in section showing another embodiment of a steering wheel according to the present invention;
Fig. 7B is an exploded sectional view of part 7B in Fig. 7A; and
Fig. 7C is an exploded sectional view showing another arrangement similar to that of Fig. 7B.

Now, preferred embodiments of the present invention will be described hereinafter with reference to the accompanying drawings. The following description will be first made of a steering wheel according to a first illustrated embodiment of the present invention. Then, manufacturing of the steering wheel in accordance with an embodiment of the present invention will be described. In the following description, a starting material of which a rim section for the steering wheel is made will be referred to as a raw material A0, a straight rod-like member formed of the raw material A0 by extrusion will be referred to as a straight rim element A1, and an arcuate member formed by bending the rim element A1 will be referred to as an arcuate rim element A2.

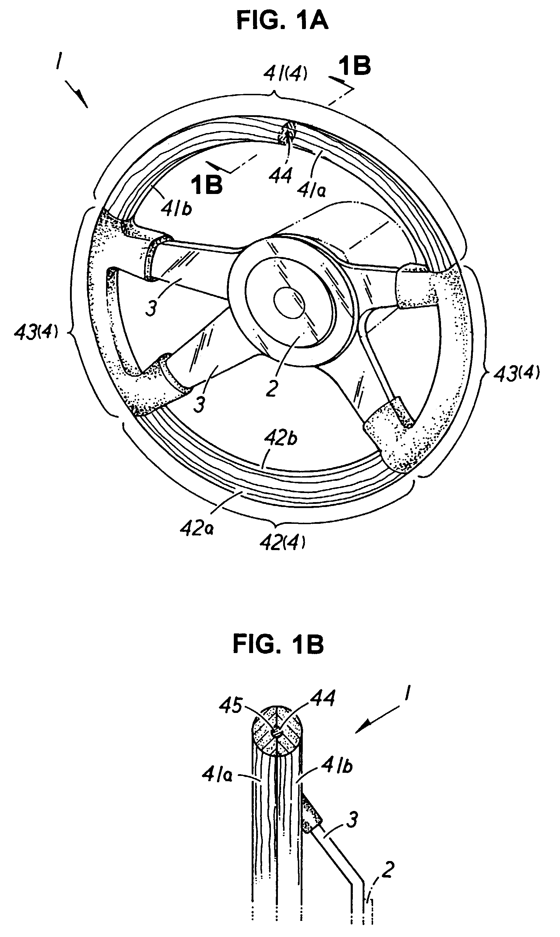

Referring first to Figs. 1A and 1B, an embodiment of a steering wheel according to the present invention is illustrated. A steering wheel of the illustrated embodiment which is generally designated by reference numeral 1 generally includes a boss section 2 acting as a centre of rotational movement of the steering wheel 1, spoke sections 3 arranged so as to radially extend from the boss section 2, and a rim section 4 connected to a distal end of each of the spoke sections 3 and formed to have an annular shape. The rim section 4 is constituted by a long rim portion 41 of an elongated arcuate shape (positioned on an upper side in Fig. 1A), a short rim portion 42 of a short arcuate shape (positioned on a lower side in Fig. 1A), and two grip portions 43 (positioned on both lateral sides in Fig. 1A) for connecting the long rim portion 41 and short rim portion 42 to each other therethrough. The rim section 4 has a core 44 incorporated therein, which may be formed by bending a metal rod into an annular shape by way of example. The long rim portion 41, short rim portion 42 and grip portions 43 are mounted on the core 44, to thereby provide the rim section 4. In the illustrated embodiment, the spoke sections 3 may be made of metal and welded directly to the core 44, so that the grip portions 43 may be formed of flexible urethane by insert molding so as to extend over both core 44 and spoke sections 3. Then, the long rim portion 41 and short rim portion 42 are mounted on the core 44 on which the grip portions 43 are thus molded, resulting in a so-called combination steering wheel being provided. Alternatively, the grip portions 43 may each be mounted therein with a rim element A2 of an arcuate shape.

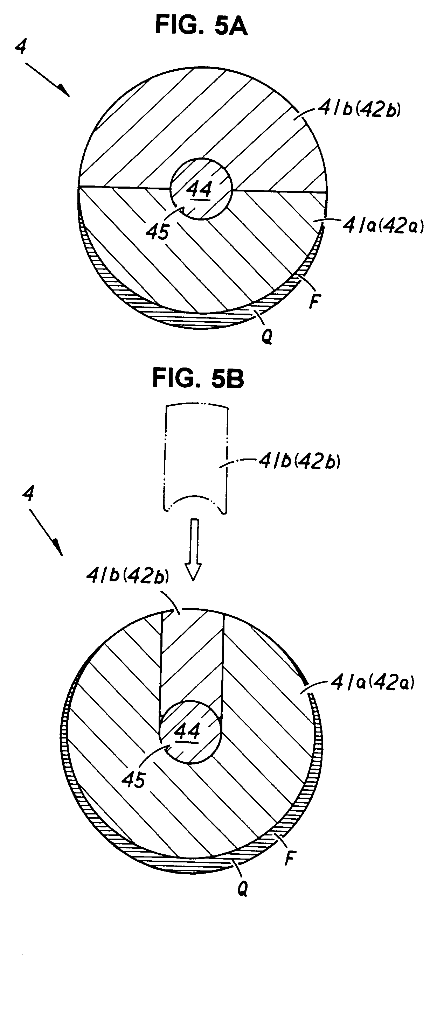

In the illustrated embodiment, the long rim portion 41 and short rim portion 42 are each constituted by two halves formed so as to extend in a longitudinal direction thereof, resulting in interposedly holding the core 44 therebetween. The two halves are adhesively joined to each other to provide each of the long rim portion 41 and short rim portion 42. More specifically, supposing that the long rim portion 41 and short rim portion 42 are mounted in a vehicle, a front side member of the long rim portion 41 which is observable from a driver's seat is designated by reference character 41a and that of the short rim portion 42 observable therefrom is 42a. Also, rear side members of the long rim portion 41 and short rim portion 42 which are not observable from the driver's seat or are out of sight of the driver are designated by reference characters 41b and 42b, respectively. The front and rear side members 41a and 41b of the long rim portion 41 are each formed to have a substantially semicircular shape in section by way of example. This is true of the front and rear side members 42a and 42b of the short rim portion 42. The front and rear side members of the long and short rim portions 41 and 42 are each formed at a central portion thereof with a core holding recess 45 in a manner to extend in a longitudinal direction thereof. Thus, in the illustrated embodiment, the long rim portion 41 and short rim portion 42 are each constituted by the two front and rear side members joined to each other. Alternatively, the long and short rim portions 41 and 42 may be configured as shown in Fig. 5B. More specifically, in Fig. 5B, the front side members 41a and 42a of the long and short rim portions 41 and 42 are each formed to have a substantially C-shape in section, so that the core 44 is received therein from a side of a rear surface thereof. Also, the rear side member 41b of the long rim portion 41 and the rear side member 42b of the short rim portion 42 are each formed to have a thickness substantially equal to a thickness of the core 44, to thereby close the core holding recess 45.

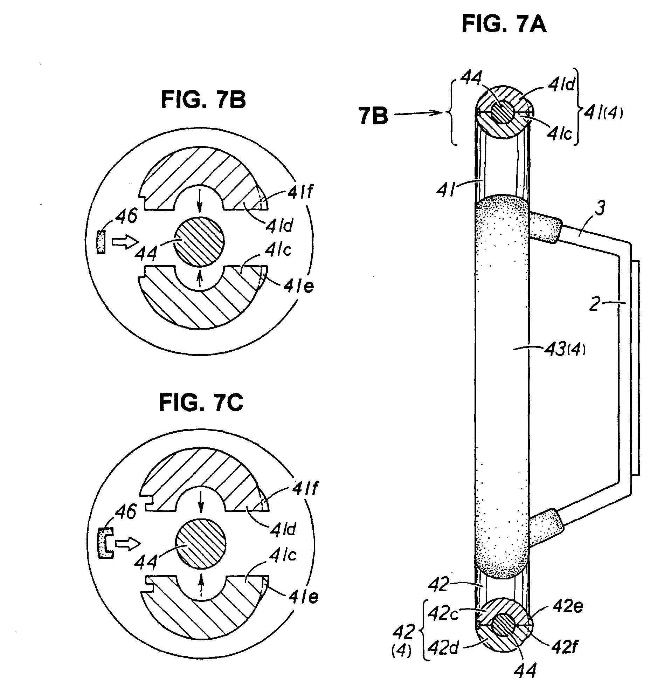

Further, in the illustrated embodiment, it is not necessarily required that the rim section 4 is constituted of such front and rear side members as described above. It may be configured as shown in Figs. 7A and 7B. More particularly, the long rim portion 41 is constituted of two halves or an inner peripheral side member 41c and an outer peripheral side member 41d and the short rim portion 42 is constituted of two halves or an inner peripheral side member 42c and an outer peripheral side member 42d. Such configuration of Figs. 7A and 7B causes joints between the inner peripheral side member 41c (42c) and the outer peripheral side member 41d (42d) to appear on both a front position observable from the driver's seat and a rear position out of sight of the driver. Thus, a cover member 46 such a molding, an element formed thereon with an ebony-like pattern or the like may be attached to at least the front joint to hide it from view. Such attachment of the cover member 46 to the joints may be likewise applied to the rim section 4 constituted of the front side member and rear side member as described above. Attachment of the cover member 46 to the joints of the rim section 4 may be carried out by forming each of the inner and outer peripheral side members or front and rear side members with a recess and interposedly fitting both ends of the cover member 46 formed to have a substantially C-shape into the respective recesses of the side members. This also ensures reinforcement of the rim section 4. In Figs. 7A to 7C, reference numerals 41e, 41f, 42e and 42f designate non-slip holding unevenness formed on the rear side of the rim section 4.

Now, a raw material A0 for the long rim portion 41 and short rim portion 42 will be described. The raw material A0 essentially consists of a thermoplastic or thermosoftening synthetic resin material such as AAS (acrylonitrile acrylic styrene) resin, AES (acrylonitrile- (ethylene-propylene-diene terpolymer)-styrene) resin, ABS (acrylonitrile butadiene styrene) resin or the like. In addition to the synthetic resin material, the raw material A0 contains woodmeal in an amount of tens of percent added to the resin material. By way of example, the raw material may be constituted by AAS (acrylonitrile acrylic styrene) resin acting as a main component and woodmeal of 60 µm in average particle diameter in an amount of 20% which has an inorganic pigment such as titanium oxide or the like incorporated therein.

The woodmeal referred to herein includes not a mere wood powder (wood shavings) but a mixture of the woodmeal with an inorganic pigment such as titanium oxide, iron oxide, cadmium yellow, carbon black or the like added thereto so as to permit the woodmeal to withstand an elevated temperature during the molding. For this purpose, a product commercially available under "TECHNOMATERIAL" (trademark) from MISAWA HOMES CO., LTD. may be suitably used. When such woodmeal having titanium oxide incorporated therein is kneaded into the main component or synthetic resin material, the raw material exhibits a colour within a range between light brown and a flesh colour, because titanium oxide has a white colour. Also, addition of the woodmeal having iron oxide or an inorganic pigment such as cadmium yellow, carbon black or the like incorporated thereinto to the synthetic resin material permits the raw material to exhibit a different appearance colour, such as dark brown or the like, because the iron oxide or the inorganic pigment has a colour other than a white colour.

The amount of each of the synthetic resin material and woodmeal added thereto may be suitably varied depending on various conditions such as molding conditions, a type of the synthetic resin material used, compatibility with the synthetic resin material or the inorganic pigment, and the like.

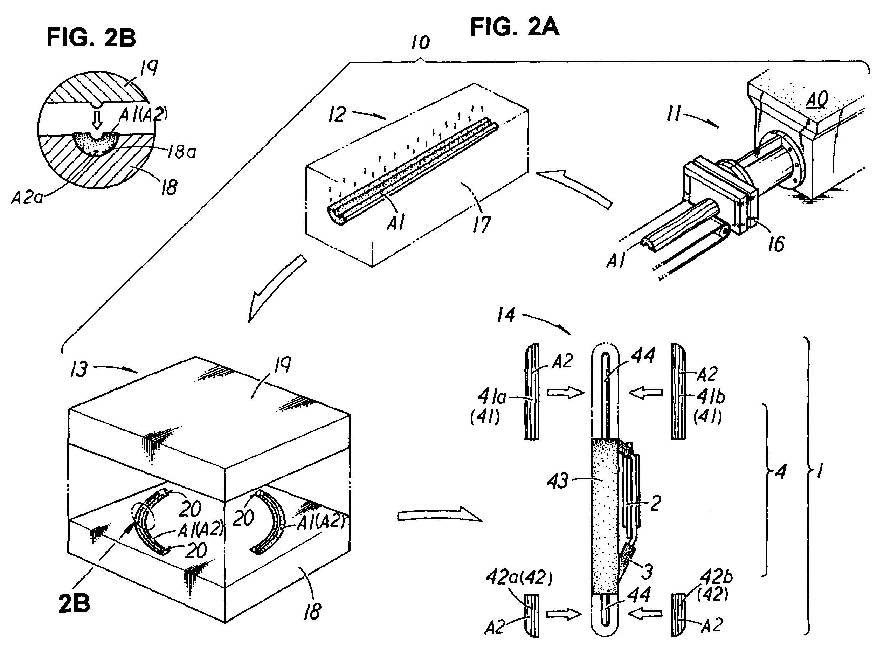

Now, manufacturing of the steering wheel 1 thus constructed will be described with reference to a manufacturing process 10 shown in Fig. 2A. The process 10 generally includes an extruding step 11, a bending step 13 and a rim assembling step 14. Also, the process 10 includes a thermally softening step 12 practiced as a pretreatment prior to the bending step 13. In addition, the process 10 may optionally include a liquid pressure transfer printing step 15 and the like.

In the extruding step 11, the raw material A0 is melted by heating in a cylinder of an extruding machine or the like known in the art and then extruded through a die nozzle or a forming die, resulting in the straight rim element A1 which has a desired shape in section being obtained. Feeding of the raw material A0 to the extruding machine is not carried out in such a manner that the synthetic resin material and woodmeal are fed at a predetermined compounding ratio directly to the extruding machine. Rather, pellets formed by kneading the synthetic resin material and woodmeal with each other are fed to the extruding machine. Desirably, plain-coloured pellets made of "TECHNOMATERIAL" constituted by incorporating titanium oxide into woodmeal and coloured pellets made of "TECHNOMATERIAL" constituted by incorporating a colour pigment into the woodmeal so as to exhibit a brown colour are fed at a compounding ratio of 3 : 1 to the extruding machine. When the pellets thus fed to the extruding machine are extruded from the extruding machine while being kept from being completely uniformly mixed together, a streak-like flow pattern on which light and shade alternately appear is permitted to be formed in a straight streak-like manner on the straight rim element A1. Of course, use of either the plain-coloured pellets or the coloured pellets likewise permits a straight streak-like flow pattern to be somewhat formed on the straight rim element A1, because the woodmeal is a natural material, to thereby be kept from fully homogenized in the resin material and the pellets are extruded from the extruding machine under an extrusion pressure of the machine. The flow pattern thus formed creates a woodgrain pattern such as a straight grain pattern or a cross grain pattern, to thereby permit the rim element A1 to exhibit an appearance of wood.

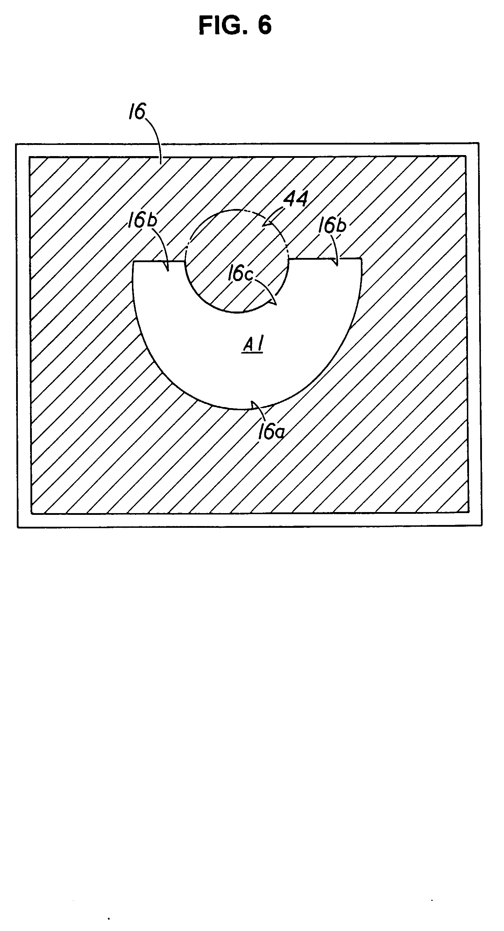

In the illustrated embodiment, the straight rim element A1 constitutes the front side member 41a and rear side member 41b of the long rim portion 41 and the front side member 42a and rear side member 42b of the short rim portion 42 later. The straight rim element A1 may be formed to have a substantially semicircular shape in section of which a central portion is recessed. More specifically, as shown in Fig. 6, the straight rim element A1 is desirably extruded by means of a forming die or a die 16 projectingly provided with a nozzle formed to have a configuration in section including an arcuate section 16a which substantially conforms to an arcuate shape in section obtained by dividing the thickest portion (outermost portion) of the long rim portion 41 or short rim portion 42 of a finished steering wheel into a front side half and a rear side half, as well as a chord section 16b which is projectingly provided with a core corresponding section 16c formed to have a configuration substantially conforming to a half of a sectional configuration of the core 44. When the straight rim element A1 is thus formed by extrusion using the nozzle-equipped die 16 or the forming die, disorder or disturbance of the flow pattern which contributes to creation of a woodgrain pattern such as a straight grain or a cross grain is minimized during the subsequent re-shaping step. Fig. 6 shows a section of the die provided with the nozzle for extrusion of the rear side members 41b and 42b which are substantially out of sight of the driver. Of course, it is possible to roughly form such a sectional configuration by means of a die nozzle and then finely form the sectional configuration by means of a forming die.

In the thermally softening step 12, the straight rim element A1 for the front and rear side members 41a and 41b of the long rim portion 41 and the front and rear side members 42a and 42b of the short rim portion 42 which has been thus prepared in the extruding step 11 is received in, for example, a thermostatic oven 17 or the like, wherein the straight rim element A1 is heated to a temperature of about 100 to 120°C, resulting in the rim element A1 being softened. When the preceding extruding step 11 and subsequent bending step 13 are carried out at the same treatment speed, the rim element A1 immediately after extruded in the extruding step 11 still holds softness to a degree, so that it may be transferred directly to the bending step 13 without being subjected to the thermally softening step 12. However, in view of a difference in treatment speed between the preceding extruding step 11 and the subsequent bending step 13 and efficient operation of whole equipment, it is desirable that the rim elements A1 as extruded from the extruding step 11 are permitted to be solidified by cooling while being kept in a straight rod-like shape and then cut to a predetermined even length or collected in a predetermined lot size, followed by feeding to the bending step 13. In this instance, the rim element A1 once solidified in the straight rod-like shape is exposed to the thermally softening step 12, resulting in the rim element A1 being softened to a degree which permits it to be re-shaped in the subsequent step. A heating temperature and a period of heating time each may be merely set at a level which permits re-shaping of the rim element A1. Excessive heating of the rim element loses meaning of using the above-described die provided with the nozzle of a fine configuration.

In the bending step 13, the rim element A1 kept softened is subjected to re-shaping, resulting in the rim element A1 being transformed from the straight rod-like shape into an arcuate shape conforming to a curvature of the core 44. In the illustrated embodiment, in the bending step 13, the straight rim element A1 kept softened is roughly bent into an arcuate shape by hand. Then, the rim element A1 is fitted in a regulating die 18 and then a forcing die 19 is forced against the regulating die 18, resulting in forming the arcuate rim element A2. The regulating die 18 and forcing die 19 are so configured that a cavity formed by cooperation of the dies 18 and 19 is formed to have the same sectional configuration as that of the long rim portion 41 or short rim portion 42 of a finished steering wheel. Removal of the arcuate rim element A2 from the dies 18 and 19 is desirably carried out after it is solidified to a degree by cooling. For this purpose, the dies may be provided with any suitable heating and cooling means. Thus, removal of the rim element A2 from the dies is carried out so as to prevent deformation of the rim element after the removal while taking manufacturing efficiency into consideration.

In general, a steering wheel is formed on a rear side thereof with a non-slip uneven portion for facilitating holding of the steering wheel. In the illustrated embodiment, formation of such unevenness A2a may be carried out simultaneously with re-shaping of the rim element into a general arcuate configuration during the bending step 13 wherein the straight rim element A1 is transformed into the arcuate rim element A2.

In the bending step 13, transformation of the straight rim element A1 into the arcuate rim element A2 causes flowing of the material due to some difference in three-dimensional geometric volume between the straight rim element A1 and the arcuate rim element A2. Also, formation of the non-slip unevenness A2a described above causes a variation in section of the rim element, leading to flow of the material. Thus, in order to ensure that the flow pattern which contributes to creation of a woodgrain pattern such as a straight grain or a cross grain is prevented from being disordered by the material flow, the illustrated embodiment is so configured that the arcuate cavity defined by cooperation between the regulating die 18 and the forcing die 19 provides a vacant region 20 on each of opposite ends defined in a longitudinal direction thereof, to thereby permit the material to escape to the vacant regions 20. Also, in the illustrated embodiment, the regulating die 18 formed with projections 18a for forming the non-slip unevenness A2a on the rim element A2 is used for pressing the arcuate rim element A2 which is configured to conform to the arcuate shape in section obtained by dividing the thickest portion (outermost portion) of the long rim portion 41 or short rim portion 42 of a finished steering wheel into the front side half and rear side half. Thus, the unevenness A2a which facilitates holding is formed by merely forcing the projections 18a of the regulating die 18 against the rim element, to thereby minimize disorder of the flow pattern.

Thus, the bending step 13 permits the straight streak-like flow pattern formed on the straight rim element A1 in the extruding step 11 to be transformed into an arcuate flow pattern along the arcuate configuration of the arcuate rim element A2 without being disordered, so that the rim element A2 may exhibit an appearance of wood created by the woodgrain pattern.

An assembly preparation step may be carried out before the arcuate rim element A2 thus bent is mounted on the core 44. More specifically, for example, when the arcuate rim element A2 for each of the long rim portion 41 and short rim portion 42 is formed to have a length larger than a predetermined one in the preceding step, the assembly preparation step is carried out in order to cut it into the predetermined length. Also, the step may be carried out for making edges of the rim element thus cut uniform or subjecting an arcuate surface of the rim element to light grinding. Further, it may take place for applying a coating such as a clear coating or the like to the surface of the rim element. The surface grinding permits removal of a skin layer which tends to be formed on the surface of the rim element therefrom, to thereby expose the woodmeal, so that the finished product or steering wheel 1 may exhibit the feel of wood. Of course, when a coating such as a clear coating is applied to the whole steering wheel 1, applying of the coating is not carried out in the assembly preparation step. Instead, applying of the coating may be practiced after the rim assembling step of mounting the element A2 on the core. In the assembly preparation step, the coating on the rim element A2 for each of the long rim portion 41 and short rim portion 42 permits the front side thereof to have been burnished and the rear side thereof to be kept exhibiting the feel of wood.

The rim assembling step 14 briefly described above is to mount pairs of the arcuate rim elements A2 bent into an arcuate shape on the core 44 while interposing the core 44 between the rim elements A2. In the first illustrated embodiment, the front side member 41a and rear side member 41b of the long rim portion 41 are joined to each other and to the core 44 by means of an adhesive applied to the chord section 16b and core corresponding section 16c thereof. Likewise the front side member 42a and rear side member 42b of the short rim portion 42 are joined to each other and to the core 44 using the adhesive. The front side members and rear side members are kept clamped until adhesive joining therebetween is attained. Then, a portion of the adhesive projecting from between the members and solidifying is removed by grinding, resulting in the finished steering wheel 1 being obtained.

In the steering wheel 1 thus manufactured, the flow pattern on each of the long rim portion 41 and short rim portion 42 each constituted by the rim elements A2 may be observed in the form of an annular flow pattern extending along an annular configuration of the steering wheel, so that light and shade alternately appear in the flow pattern. This permits a woodgrain pattern giving the impression that it is formed by a sliced veneer to appear on the steering wheel 1, so that it may satisfactorily exhibit an appearance of wood.

In the first illustrated embodiment, the rim section 4 of the steering wheel 1 is divided into the front side and rear side, each of which is constituted by the rim element A2. Such construction permits joints between the front side member and the rear side member to be positioned at the innermost peripheral portion of the rim section 4 and the outermost peripheral portion thereof, resulting in the joints being conveniently out of sight of a driver. In general, such joints are fine to a degree of rendering it substantially impossible to recognize it at a glance. However, in order to hide the joints and provide a specific decoration effect, a cover member 46 such as a molding, an ebony-patterned element or the like may be mounted thereon. In this instance, a second illustrated embodiment, as shown in Fig. 7C, may be so configured that the rim elements for the front side member and rear side member are formed with recesses, respectively, and the cover member 46 of a C-shape is securely mounted on the joint while both ends of the cover member 46 are fitted in the respective recesses of the rim elements. Attachment of the cover member 46 to the rim elements A2 may be attained by any suitable means such as welding, fusion bonding, fitting or the like in addition to an adhesive. Mounting of the cover member 46 on the joints between the rim elements is advantageous when the rim section 4 is constituted by an inner peripheral side member and outer peripheral side member.

The liquid pressure transfer printing step 15 may be optionally practiced as required, like the clear coating step. The liquid pressure transfer printing step 15 may be carried out on the whole steering wheel which has been just subjected to the rim assembly step of mounting the long rim portion and short rim portion on the core. Alternatively, it may be carried out on the arcuate rim element A2 which has been subjected to the bending step. The following description will be made on liquid pressure transfer printing carried out on the arcuate rim element A2.

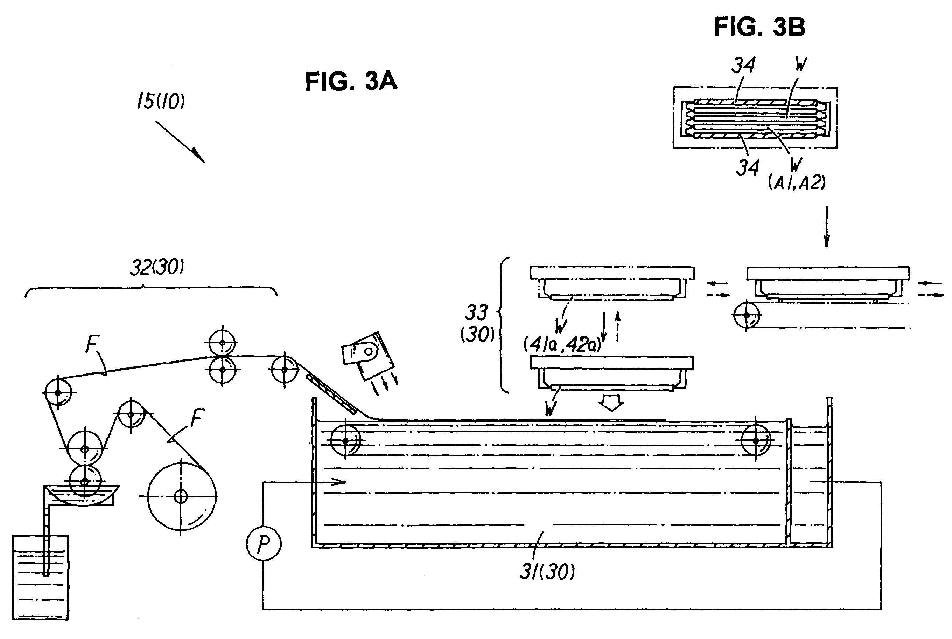

The liquid pressure transfer printing may be practiced by means of a liquid pressure transfer apparatus designated by reference numeral 30 in Fig. 3A. The liquid pressure transfer apparatus 30 generally includes a transfer bath 31, a transfer film feed unit 32 and an object carrier unit 33. The transfer bath 31 is fed therein with a transfer film F on which a suitable pattern such as a woodgrain pattern or the like is printed by means of the transfer film feed unit 32. The transfer film F thus fed to the transfer bath 31 is kept floated on a surface of a liquid in the bath 31. When the transfer film F is activated, resulting in it being rendered transferable, the object carrier unit 33 is actuated to force an object W to which an ink pattern on the transfer film F is to be transferred against the transfer film F, so that the ink pattern on the transfer film F may be transferred to the object W. In this instance, the object W is constituted by the arcuate rim element A2 for each of the front side members 41a and 42a constituting the front side of the rim section 4 of the steering wheel 1.

In Fig. 3A, the object W is shown as if it is vertically downwardly lowered in the transfer bath 31. Alternatively, the object W may be obliquely lowered by means of a conveyor of an inverted triangular configuration or a robot. Also, in the illustrated embodiment, the transfer film F is coated thereon with an activator and then fed to the transfer bath 31. Alternatively, the illustrated embodiment may be so configured that the transfer film F is fed to the transfer bath 31 and then coated thereon with a solvent or the like, resulting in the transfer film F being activated. Further, in illustrated embodiment, the transfer film F is continuously fed to the transfer bath 31 in which the liquid is flowed. Alternatively, individual transfer films F which are in the form of a leaf may be fed one by one by hand to the transfer bath 31 in which the liquid is kept stationary and then the object W is immersed in the liquid by hand. In addition, the object W is constituted by the arcuate rim element A2. The object W may be the straight rim element A1 which is not subjected to the bending step 13, as shown in Fig. 3B.

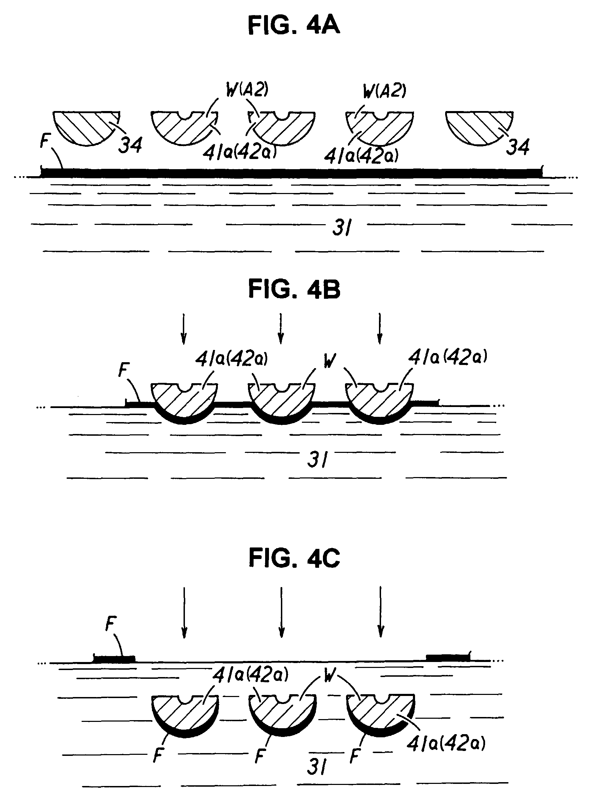

The liquid pressure transfer printing is desirably proceeded while permitting a transfer ink layer Q to be gradually reduced in thickness. For this purpose, a plurality of the objects W may be forcedly immersed in the liquid while being spaced from each other at predetermined intervals, as shown in Figs. 4A to 4C by way of example. This permits the transfer film F to be gradually reduced in thickness toward a chord of a section of the rim element A2. The transfer film F is ultimately cut near both ends of an arc of the rim element A2, resulting in a transfer printing pattern being formed by gradations on the rim element A2, wherein a ground pattern gradually appears on the rim element A2. In Figs. 3A and 3B, reference numeral 34 designates film extension members formed to have substantially the same configuration as the objects W and arranged on both sides of the objects W.

When the liquid pressure transfer printing is to be carried out on a single object W or on the whole steering wheel which has been subjected to the rim assembling step, the film extension member 34 may be formed to have, for example, a screen-like configuration while being spaced from the object W at a substantially uniform interval outside an outer periphery of the object W. Such liquid pressure transfer printing may be carried out according to a procedure disclosed in Japanese Patent Application Laid-open Publication No. 117326/1995 entitled "Liquid Pressure Transfer Method", of which the disclosure is herein incorporated by reference.

Also, in the illustrated embodiment, the liquid pressure transfer printing is carried out on the rim element A2 for each of the front side members 41a and 42a of the long and short rim portions 41 and 42. The liquid pressure transfer printing may be carried out on the whole steering wheel which has been subjected to the rim assembling step 14. In this instance, the liquid pressure transfer printing, of course, can be made on the rear side members 41b and 42b of the long and short rim portions 41 and 42 which are difficult to observe from a driver's seat as well. When the transfer printing takes place on a whole periphery of the steering wheel, a joint between both ends of the transfer film F is desirably located at a position which permits the joint to be out of sight of a driver's seat. Such liquid pressure transfer printing may be practiced according to a procedure disclosed in Japanese Patent Application Laid-Open Publication No. 329498/1998 entitled "Method for Manufacturing Steering Wheel Having Liquid pressure Transfer Printing Applied Thereto", of which the disclosure is herein incorporated by reference.

The liquid pressure transfer printing step 15, as shown in Fig. 5A, permits the print to be exclusively applied to the front side members 41a and 42a of the long and short rim portions 41 and 42 which are observable from a driver's seat in a state where the steering wheel 1 is mounted in a vehicle. Also, in the illustrated embodiment, the step 15 permits formation of the transfer printing pattern by gradations wherein the transfer ink layer Q is gradually reduced in thickness toward the innermost and outermost peripheral portions of the rim section 4, resulting in the ground pattern gradually appearing. On the front side of the steering wheel 1 which is observable from a driver's seat, the flow pattern acting as the ground pattern is observed through the transfer pattern superposed on the ground pattern, so that the flow pattern or ground pattern and the transfer pattern synergistically cooperate with each other to create a woodgrain pattern. The thus-created woodgrain pattern is rendered gradually thin toward the rear side of the steering wheel which is out of sight of a driver. Whereas, the feel of wood on the rear side of the steering wheel is not deteriorated, resulting in the feel being substantially equal to that of natural wood.

In the illustrated embodiment, the joint or boundary region of the transfer pattern is defined at each of the innermost peripheral portion and outermost peripheral portion of the rim section 4. When the front side members 41a and 42a of the long and short rim portions 41 and 42 which constitute the front side of the steering wheel 1 are formed to have a C-shape in section as shown in Fig. 5B or when the liquid pressure transfer printing is carried out on the whole steering wheel which has been subjected to the rim assembling step 14, the boundary may be defined at a more rearward position.

Although preferred embodiments of the method of the present invention have been described above as related to the embodiments of a steering wheel, the method may be used for manufacturing an article for a vehicle having a flat shape, such as a cover plate for a power window switch or the like. For providing such an article, an extruded plate is subjected to re-heating, rough bending, fitting in a die, pressing and the like in turn in a similar manner as described above.

While preferred embodiments of the invention have been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A steering wheel (1) comprising:
a rim section (4) having a core (44) incorporated therein;
said rim section (4) being constituted by rim elements (A2) made of a thermosoftening synthetic resin material to which woodmeal is added, resulting in said rim section (4) being formed thereon with a flow pattern;
said rim elements (A2) each being re-shaped from a straight rod-like configuration into an arcuate configuration in conformity to a curvature of said core (4) and mounted on said core (4), so that the flow pattern may be transformed into an annular flow pattern.

2. A steering wheel (1) as defined in claim 1, wherein said thermosoftening synthetic resin material has a color pigment added thereto so that the flow pattern is formed in an annular flow pattern which has a clear woodgrain emphasized by said added color pigment.

3. A steering wheel (1) as defined in claim 2 or 3, wherein said rim section (4) is formed thereon with an uneven portion (A2a) to facilitate holding, in such a manner that the flow pattern is transformed into the annular flow pattern while preventing the thus-formed annular flow pattern from being disordered by said unevenness (A2a).

4. A method for manufacturing a steering wheel (1) comprising the steps of:
extruding a thermosoftening synthetic resin to which woodmeal is added to prepare a pair of straight rod-like rim elements (A1);
bending the straight rod-like rim elements (A1) into an arcuate shape in conformity to a curvature of a core (44) while keeping the rim elements (A1) softened; and
mounting the rim elements (A2) thus bent on the core (44) while interposing the core (44) therebetween.

5. A method as defined in claim 4, wherein said extruding step is carried out using a nozzle formed to have a semicircular shape in section having an arc section (16a) formed substantially in conformity to an arcuate shape which is a half of a sectional configuration of a rim section (4) of a finished steering wheel (1) and which is defined at an outermost portion of the rim section (4) and a chord section (16b) projectingly provided with a core corresponding section (16c) which is formed substantially in conformity to a half of a sectional configuration of the core (44), resulting in the rim elements (A2) being prepared in the form of a straight rod-like shape.

6. A method as defined in claim 4 or 5, wherein said bending step is carried out using a regulating die (18) formed thereon with projections (18a) for forming an uneven portion to facilitate holding and a forcing die (19); and
the straight rod-like rim elements (A1) are each softened by re-heating to be roughly bent into an arcuate shape and then fitted in the regulating die (18), then pressed by means of the forcing die (19), during which the regulating die (18) and forcing die (19) cooperate with each other to define an arcuate cavity having a vacant region (20) defined at each of opposite ends thereof in a longitudinal direction thereof.

7. A method as defined in claim 4, 5 or 6, wherein said pair of rim elements (A2) each include a front side rim element (41a, 42a) observable from a driver's seat and a rear side rim element (41b, 42b) opposite to the front side rim element (41a, 42a); and
said mounting step is carried out by mounting the front and rear side rim elements (41a, 42a, 41b, 42b) on the core (44) while adhesively joining the front and rear rim elements (41a, 42a, 41b, 42b) to each other.

8. A method as defined in claim 4, 5 or 6, wherein said pair of rim elements each include an inner peripheral side rim element (41c, 42c) and an outer peripheral side rim element (41d, 42d) opposite to the front side rim element (41c, 42c); and
said mounting step is carried out by mounting the inner and outer peripheral side rim elements (41c, 42c, 41d, 42d) on the core (44) while adhesively joining the inner and outer peripheral side rim elements (41c, 42c, 41d, 42d) to each other.

9. A method as defined in any of claims 4, 7 and 8 wherein said mounting step includes mounting a cover member (46) on a joint between the rim elements (41c, 42c, 41d, 42d).

10. A method as defined in any of claims 4 to 9, wherein the thermosoftening synthetic resin material which is fed in the extruding step is constituted by a combination of pellets having the woodmeal kneadingly incorporated therein and pellets having a color pigment added thereto as well as the woodmeal and exhibiting a color different from that of the former pellets.

11. A method as defined in any of claims 4 to 10, further comprising the step of applying a coating to the rim elements (A2), the coating being applied to a front side of the rim elements (A2) observable from a driver's seat.

12. A method as defined in any of claims 4 to 11, further comprising the step of carrying out liquid pressure transfer printing on the rim elements (A2) ;
wherein the transfer print is applied to a front side of the rim elements (A2) observable from a driver's seat; and
the liquid pressure transfer printing is carried out so as to permit formation of a transfer printing pattern by gradations on the rim elements (A2) wherein a transfer ink layer (Q) is gradually reduced in thickness toward a rear side of the rim elements (A2), whereby a ground pattern gradually appears on the rim elements (A2).

13. A method of manufacturing a shaped wood-effect article comprising the steps of:
extruding a thermosoftening synthetic resin to which woodmeal is added to prepare an extruded element (A1) ;
bending the extruded element (A1) whilst softened into a desired shape; and
cooling the element (A2) in said desired shape.

14. A wood-effect article manufactured according to the method of claim 13 having a wood effect flow pattern formed by said bending.
